(19) Europäisches Patentamt / European Patent Office / Office européen des brevets

(11) **EP 4 234 996 B1**

(12) **EUROPEAN PATENT SPECIFICATION**

(45) Date of publication and mention
of the grant of the patent:
**06.08.2025 Bulletin 2025/32**

(51) International Patent Classification (IPC):
**F16K 31/04** *(2006.01)* **F25B 41/35** *(2021.01)*

(21) Application number: **23157746.1**

(52) Cooperative Patent Classification (CPC):
**F16K 31/04; F16K 31/047; F25B 41/35;** Y02B 30/70

(22) Date of filing: **21.02.2023**

(54) **ELECTRIC VALVE**

ELEKTRISCHES VENTIL

SOUPAPE ÉLECTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.02.2022 JP 2022029546**

(43) Date of publication of application:
**30.08.2023 Bulletin 2023/35**

(73) Proprietor: **Fujikoki Corporation
Tokyo 158-0082 (JP)**

(72) Inventors:
• **Kojo, Riki
Tokyo, 158-0082 (JP)**
• **Suganuma, Takeshi
Tokyo, 158-0082 (JP)**
• **Yanagisawa, Shu
Tokyo, 158-0082 (JP)**

(74) Representative: **Ter Meer Steinmeister & Partner
Patentanwälte mbB
Artur-Ladebeck-Strasse 51
33617 Bielefeld (DE)**

(56) References cited:
WO-A1-2014/069361      CN-U- 212 107 134
JP-A- 2004 308 835      US-B1- 6 561 480

## Description

[Technical Field]

The present invention relates to an electric valve.

[Background of the Invention]

Conventionally, electric valves have been installed, for example, within fluid piping systems and used to open and close the fluid flow path and control the flow rate of the fluid. For example, in the electric valve illustrated in Patent Document 1, by using a planetary gear reduction mechanism to reduce the torque of a stepping motor attached to a valve main body and transmit it to a valve body, accurate flow control and sealing performance at the time of valve closing is realized.

US 6 561 480 B1 discloses a motor-operated valve including a rotor having a shaft formed with an external thread. It further includes a needle valve element having a needle valve head at one end portion thereof and an internal thread engaging with the external thread at another end portion. The valve element has a joining portion for joining the valve head to the inter thread. The motor-operated valve also includes a main valve body having a guide portion which stops the rotation of the valve element but allows the axial movement of the valve element. The shaft has an upper end supported by a supporting portion provided on a top wall of a valve housing, while a lower end of the shaft is rotatably supported by a bearing secured to the main valve body.

WO2014/069361 A1 discloses a valve device in which a valve element driven by a stepping motor opens and closes an aperture in a gas inlet tube in a main body case composed of a first case unit and a second case unit that are joined together, wherein a rotor unit of the stepping motor is disposed inside the first case unit, and a bearing member for rotatably supporting a shaft unit at one end side of the rotor unit and a partition wall provided with a cylindrical wall for rotatably supporting a small diameter shaft unit at the other end side of the rotor unit are supported by the first case unit.

JP 2004 308835 A discloses a motor-operated valve comprising a valve element to be put into separation from or contact with a seat portion in a valve chest only by the rotating motor of a rotating shaft to be rotationally driven by a stepping motor. The valve element is put into separation from or contact with to the seat portion in parallel to the rotating shaft. A valve holder is supported slidably up and down by the rotating shaft and the valve element is mounted on the valve holder. The valve holder is mounted on a lifter fitted concentrically with the rotating shaft and slidably on the rotating shaft. A stopper is provided on the lifter for restricting the up-and-down movement of the lifter. The stopper as coil springs wound on the lifter has a slider arranged between the springs for up-and-down movement with the rotation of the rotor.

[Citation List]

[Patent Documents]

[Patent Document 1] Japanese Unexamined Patent Application Publication No. 2021-148280

[Summary of Invention]

[Technical Problem]

In the electric valve of Patent Document 1, a support shaft that rotatably supports a rotor and a sun gear is configured to move up and down in accordance with the rotation of the rotor for opening and closing operations of the valve body. The upper end of the support shaft is fitted into a central opening of a support member mounted inside the can so as to be slidable in an axial direction. This central opening penetrates through the support member.

Here, in the electric valve of Patent Document 1, the upper end of the support shaft does not come into contact with the can within the stroke range in which the valve body is normally operated. However, when a step-out or the like occurs in the control device that controls the electric valve, for example, the support shaft may move beyond the normally operated stroke range such that the support shaft comes into contact with the can.

If such contact is temporary, since the support shaft and the can are both made of metal, no immediate damage occurs. However, when the support shaft comes into frequent contact with the can over a long period of use, there are concerns about wear, deformation, and the like. Further, in the case of an electric valve of a type in which the valve body is driven by using a planetary gear mechanism or the like having a relatively high reduction ratio, since the surface pressure of the contact portion between the support shaft and the can increases, wear and deformation becomes more likely to occur in both parts.

An object of the present invention is to provide an electric valve capable of ensuring reliability while suppressing cost.

[Means for Solving the Problems]

An electric valve according to the present invention includes a valve main body that includes a valve chamber for accommodating a valve body, a can coupled to the valve main body, a support shaft that rotatably supports a rotor of a motor, a conversion mechanism for displacing the valve body and the support shaft in an axial direction in accordance with a rotation angle of the rotor, a shaft support portion for supporting the support shaft so as to be movable in at least an axial direction with respect to the can; and a buffer portion disposed between an end portion of the support shaft and the can along an axial direction.

[Advantageous Effects of Invention]

According to the present invention, it is possible to provide an electric valve capable of ensuring reliability while suppressing cost.

[Brief Description of Drawings]

[Figure 1] FIG. 1 is a longitudinal sectional view illustrated a closed-valve state of an electric valve according to a first embodiment.
[Figure 2] FIG. 2 is a longitudinal sectional view illustrating an open-valve state of an electric valve according to a first embodiment.
[Figure 3] FIG. 3 is a longitudinal sectional view illustrated a closed-valve state of an electric valve according to a modified example of a first embodiment.
[Figure 4] FIG. 4 is a longitudinal sectional view illustrating a closed-valve state of an electric valve according to a second example, not part of the invention.

[Description of Embodiment(s)]

Hereinafter, an embodiment of an electric valve according to the present invention will be described with reference to the drawings. It should be noted that, in the present specification, the rotor side will be described as an upper portion, and the valve body side will be described as a lower portion. In addition, the mechanical paradox planetary gear reduction mechanism is a type of planetary gear reduction mechanism.

[First Embodiment]

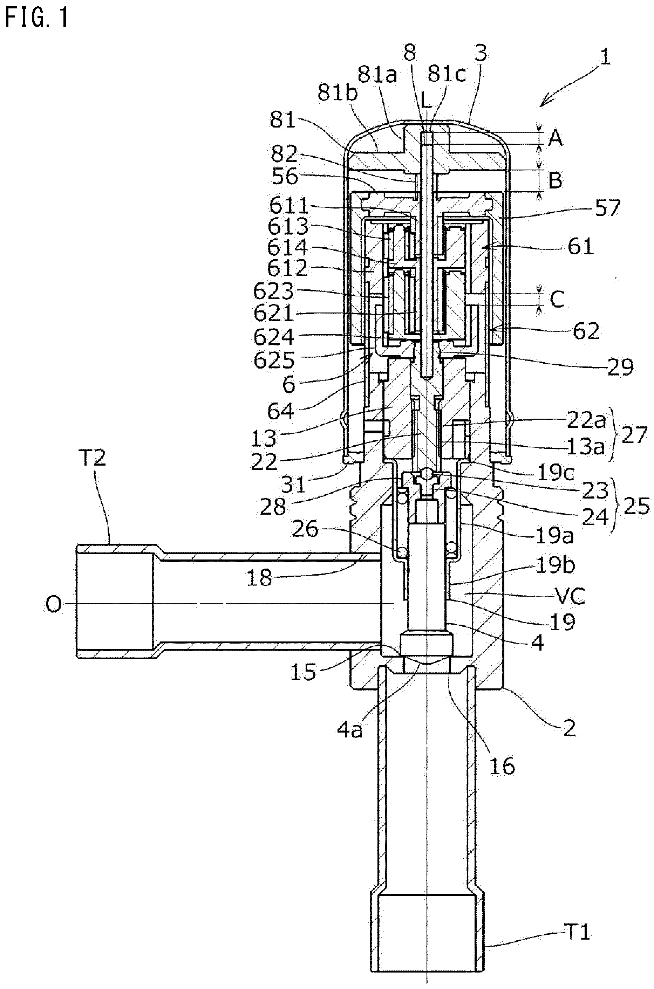

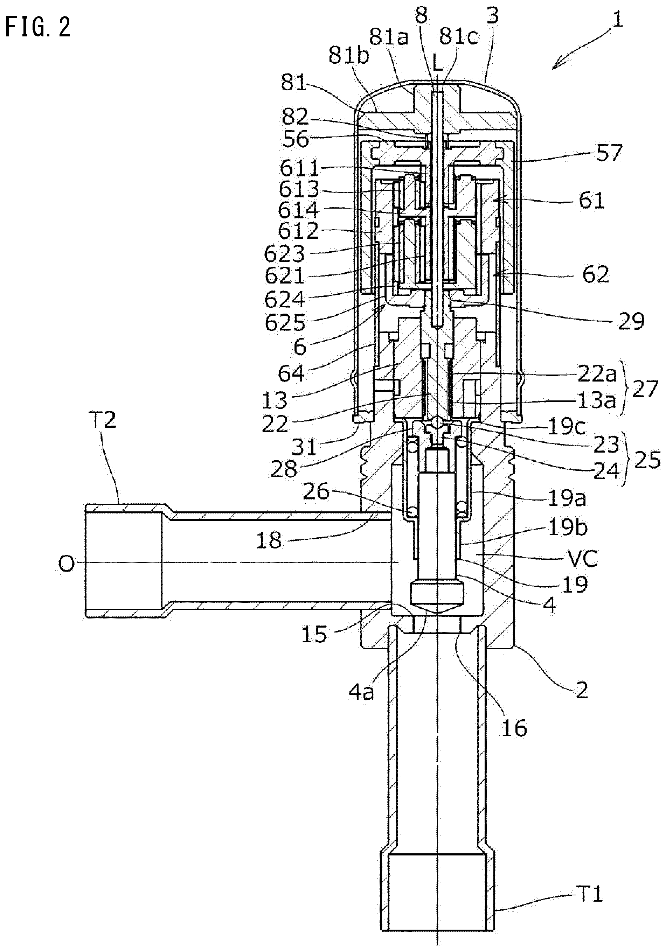

FIG. 1 is a longitudinal sectional view illustrating a closed-valve state of an electric valve 1 according to a first embodiment of the present invention, and FIG. 2 is a longitudinal sectional view illustrating an open-valve state of the electric valve 1 according to the first embodiment, but the stator disposed outside the can is omitted. The electric valve 1 of the present embodiment is used, for example, to adjust a refrigerant flow rate in a refrigeration cycle. Let L be the axis of the electric valve 1.

The electric valve 1 of the present embodiment includes a valve main body 2 having a valve seat 15 formed inside a valve chamber VC; a metal, closed-top cylindrical can 3 fixed to the valve main body 2 via a base plate 31, a stepping motor including a stator (not illustrated in the figures) mounted outside the can 3 and a rotor 57 mounted inside the can 3, a reduction mechanism 6 that reduces the rotational torque of the rotor 57 and transmits it, a valve body 4 that contacts and separates from the valve seat 15 to control the flow rate of a fluid, and a screw drive member 22 that converts the rotary motion of the output gear of the reduction mechanism 6 into linear motion via a screw feed mechanism (a conversion mechanism) 27 to drive the valve body 4. Therefore, according to the reduction ratio of the reduction mechanism 6, the rotation angle of the output gear of the reduction mechanism 6 (the angle at which the output gear rotates about the axis L) is reduced more than the rotation angle of the rotor 57 (the angle at which the rotor 57 rotates about the axis L), and the screw feed mechanism 27 displaces the valve body 4 in the axial direction L by a distance corresponding to the rotation angle of the output gear of the reduction mechanism 6.

In the valve main body 2, a valve port 16 communicating with the valve chamber VC is formed along the axis L, a first pipe T1 is connected to the valve port 16 by brazing or the like, and a second pipe T2 is connected by brazing or the like so as to communicate with an opening 18 formed on the side surface of the valve chamber VC. Let O be the axis of the second pipe T2. The axis O is orthogonal to the axis L.

In addition, a screw bearing member 13 having a female screw portion 13a formed at the central lower end side is inserted into the upper portion of the valve chamber VC of the valve main body 2, and is fixed to the valve main body 2 by press-fitting or the like.

A shaft support portion 81 made of resin is attached to the inside of the upper end of the can 3. More particularly, the shaft support portion 81 is formed by connecting a cylindrical portion 81a having an upper end surface in contact with the lower surface of the can 3, and a flange portion 81b arranged around the periphery of the cylindrical portion 81a and having its outer circumference brought into contact with the inner circumference of the can 3. A blind hole 81c with a closed upper end is formed coaxially with the axis L in the central lower surface of the cylindrical portion 81a. The inner diameter of the blind hole 81c is substantially equal to the outer diameter of the support shaft 8. The outer diameter (the contact area) of the upper end surface of the cylindrical portion 81a that contacts the can 3 is larger than the outer diameter (the axially perpendicular cross-sectional area) of the blind hole 81c, and is preferably a diameter of 3 times or more, for example. The distance between the bottom surface of the blind hole 81c and the upper end surface of the cylindrical portion 81a is preferably at least twice the thickness of the can 3. A coil spring 82 is disposed between the shaft support portion 81 and the rotor support member 56, and biases the rotor support member 56 downward. In the present embodiment, the shaft support portion 81 also serves as a buffer portion; that is, the shaft support portion 81 and the buffer portion are configured as a single member.

The reduction mechanism 6 includes a first-stage reduction portion 61 and a second-stage reduction portion 62 arranged coaxially and connected in series. The first-stage reduction portion 61 includes, on the inner circumferential side of the rotor 57, a sun gear 611 integrally formed with the rotor support member 56, an upper portion of a fixed ring gear 612 fixed via a thin cylindrical body 64 attached to the upper portion of the valve main body 2 and extending upward, a planetary gear 613 disposed between the sun gear 611 and the fixed ring gear 612 and meshing with each, and a carrier 614 rotatably supporting the planetary gear 613. These components constitute a first planetary gear reduction mechanism.

The second-stage reduction portion 62 includes a sun gear 621 which is integral with the carrier 614 and is rotatably supported with respect to the support shaft 8, a lower portion of the fixed ring gear 612, a planetary gear 623 which is disposed between the sun gear 621 and the fixed ring gear 612 and meshes with each, a carrier 624 for rotatably supporting the planetary gear 623, and a closed-bottom cylindrical output gear member 625 having teeth on its inner circumference that mesh with the planetary gear 623. These components constitute the mechanical paradox planetary gear reduction mechanism (a second planetary gear reduction mechanism). The number of teeth of the fixed ring gear 612 is set to be different from the number of teeth of the output gear member 625.

The metal support shaft 8 passes through the rotor support member 56 and the sun gear 621 and is rotatably held therewith. The upper end of the support shaft 8 is fitted into the blind hole 81c of the shaft support portion 81 attached to the can 3, and is supported so as to be movable in the rotational direction and the axial direction L.

The upper portion of a stepped cylindrical output shaft portion 29 formed on the upper portion of the screw drive member (the output shaft) 22 is press-fitted into the center of the bottom portion of the output gear member 625. The lower end of the support shaft 8 is press-fitted into the upper opening of the output shaft portion 29, and the output gear member 625, the support shaft 8, and the output shaft portion 29 are configured to rotate integrally.

A male screw portion 22a formed at the lower portion of the screw drive member 22 is screwed to the female screw portion 13a of the screw bearing member 13. The rotational movement of the output gear member 625 (that is, the rotor 57) is converted into linear movement along the axial direction L by a screw feed mechanism (conversion mechanism) 27 consisting of a male screw portion 22a and a female screw portion 13a.

The output gear member 625 is integrally connected to the screw drive member 22, and when the output gear member 625 (the rotor 57) rotates, the output gear member 625 and the screw drive member 22 rotate together and move linearly along the axis L with respect to the valve main body 2. As the output gear member 625 moves up and down, the carrier 624 and the planetary gear 623 mounted on the bottom surface of the output gear member 625 also move up and down together with the support shaft 8.

The lower end of a ball-shaped joint 25 including a ball 23 and a ball receiving seat 24 comes into contact with the upper end of a cylindrical spring support member 28 coaxially press-fitted to the upper end of the valve body 4. A cylindrical spring case 19 disposed around the valve body 4 and the spring support member 28 is formed by connecting an enlarged diameter portion 19a, a reduced diameter portion 19b, and an upper end flange portion 19c that extends radially outward from an upper end of the enlarged diameter portion 19a. The upper end flange portion 19c engages with the inner peripheral step portion of the valve main body 2 and is fixedly held by the screw bearing member 13. The reduced diameter portion 19b slidably holds the outer circumference of the valve body 4.

A compression coil spring 26 is arranged in a compressed state with its lower end in contact with a step portion between the enlarged diameter portion 19a and the reduced diameter portion 19b and its upper end engaged with the spring support member 28, thereby continuously biasing the valve body 4 in the valve opening direction.

The linear movement of the screw drive member 22 is transmitted to the shaft-like valve body 4 via the ball-shaped joint 25 and the spring support member 28, whereby the valve body 4 is guided by the spring case 19 and moves in the axial direction L. The lower end of the valve body 4 has a disk-like shape with an enlarged diameter, and a tapered conical surface 4a is formed on the lower surface thereof.

When the valve element 4 rises, the points that have a possibility of contacting each other are the bottom surface of the blind hole 81c in the shaft support portion 81 and the upper end of the support shaft 8, the lower surface of the shaft support portion 81 and the upper surface of the rotor support member 56, and the lower surface of the fixed ring gear 612 and the upper surface of the output gear member 625.

In the valve-closed state illustrated in FIG. 1, where A is the axial direction minimum distance between the bottom surface of the blind hole 81c in the shaft support portion 81 and the upper end of the support shaft 8, B is the axial direction minimum distance between the lower surface of the shaft support portion 81 and the upper surface of the rotor support member 56, and C is the axial direction minimum distance between the lower surface of the fixed ring gear 612 and the upper surface of the output gear member 625, the following relational expression is established.

$$A < C \qquad (1)$$

$$A < B \qquad (2)$$

$$B \leqq C \qquad (3)$$

By satisfying the relational expression (1), when the valve body 4 rises, the upper end of the support shaft 8 touches the bottom surface of the blind hole 81c before the fixed ring gear 612 and the output gear member 625 come into contact. For this reason, the fixed ring gear 612 and the output gear member 625 are prevented from coming into contact with each other with excessive torque, so that the members can be prevented from biting into each other.

By satisfying the relational expression (2), when the valve body 4 rises, the upper end of the support shaft 8 touches the bottom surface of the blind hole 81c before the lower surface of the shaft support portion 81 and the upper surface of the rotor support member 56 come into contact. For this reason, the shaft support portion 81 and the rotor support member 56 are prevented from coming into contact with each other, and wear of the contact portions can be suppressed.

By satisfying the relational expression (3), when the valve body 4 rises, the shaft support portion 81 and the rotor support member 56 come into contact with each other at the same time or before the fixed ring gear 612 and the output gear member 625 come into contact with each other. For this reason, the fixed ring gear 612 and the output gear member 625 are prevented from coming into contact with each other with excessive torque, so that the members can be prevented from biting into each other. That is, the present embodiment relates to a configuration in which, when the valve body 4 rises, the bottom surface of the blind hole 81c in the shaft support portion 81 and the upper end of the support shaft 8 are the first to come into contact with each other.

(Operation of the Electric Valve)

In the valve-closed state illustrated in FIG. 1, the conical surface 4a of the valve body 4 is seated on the valve seat 15, and the flow from the valve chamber VC to the valve port 16 is prevented. This restricts the flow between the second pipe T2 and the first pipe T1.

When the rotor 57 of the stepping motor is driven to rotate by supplying power to the stator from the valve-closed state, the rotational torque of the rotor 57 is transmitted to the sun gear 611 of the first stage reduction portion 61 via the rotor support member 56, and the rotational torque reduced by the first reduction ratio is output from the carrier 614.

Further, the rotational torque received by the carrier 614 is transmitted to the sun gear 621 of the second-stage reduction portion 62, and the rotational torque reduced by the second reduction ratio is output from the output gear member 625. The rotational torque of the output gear member 625 is transmitted to the output shaft portion 29.

The rotational movement of the output shaft portion 29 is converted into linear movement by the screw feed mechanism 27, whereby the output shaft portion 29 rises in the axial direction together with the valve body 4, the conical surface 4a separates from the valve seat 15, and the valve is opened as illustrated in FIG. 2. In the valve-open state, fluid flows from the valve chamber VC toward the valve port 16a with a flow rate corresponding to the gap between the conical surface 4a and the valve seat 15. Therefore, the second pipe T2 and the first pipe T1 are allowed to move.

Since the rotor 57 rotates in the opposite direction by supplying power with opposite characteristics to the stator from the valve open state, the valve body 4 is lowered by an operation opposite to that described above, and the conical surface 4a of the valve body 4 becomes seated on the valve seat 15, whereby the valve can be closed.

Supposing that the valve body 4 were to be raised beyond the normal operating range due to a step-out or the like of the control device, the upper end of the support shaft 8 touches the bottom surface of the blind hole 81c before the fixed ring gear 612 and the output gear member 625 come into contact, and before the lower surface of the shaft support portion 81 and the upper surface of the rotor support member 56 contact each other, in accordance with the above relational expressions (1) to (3). When the upper end of the support shaft 8 touches the bottom surface of the blind hole 81c, the pressing force is transmitted to the can 3 via the shaft support portion 81. In particular, since the electric valve 1 has a high reduction ratio due to the first-stage reduction portion and the second-stage reduction portion, the force applied by the support shaft 8 to the counterpart member is excessively large.

According to the present embodiment, since the outer diameter of the cylindrical portion 81a coming into contact with the can 3 is larger than the outer diameter of the support shaft 8, even in the case that the upper end of the support shaft 8 touches the bottom surface of the blind hole 81c and applies an excessive force, the surface pressure of the contact surface between the cylindrical portion 81a and the can 3 is greatly reduced, so that the deformation and damage of the can 3 can be suppressed, and thereby the fail-safe function of the electric valve 1 can be ensured while suppressing the cost. Further, since the shaft support portion 81 is made of resin, it is possible to exert a buffering function on both the can 3 and the support shaft 8 which are made of metal, such that it is possible to avoid defects such as damage.

(Modified Example)

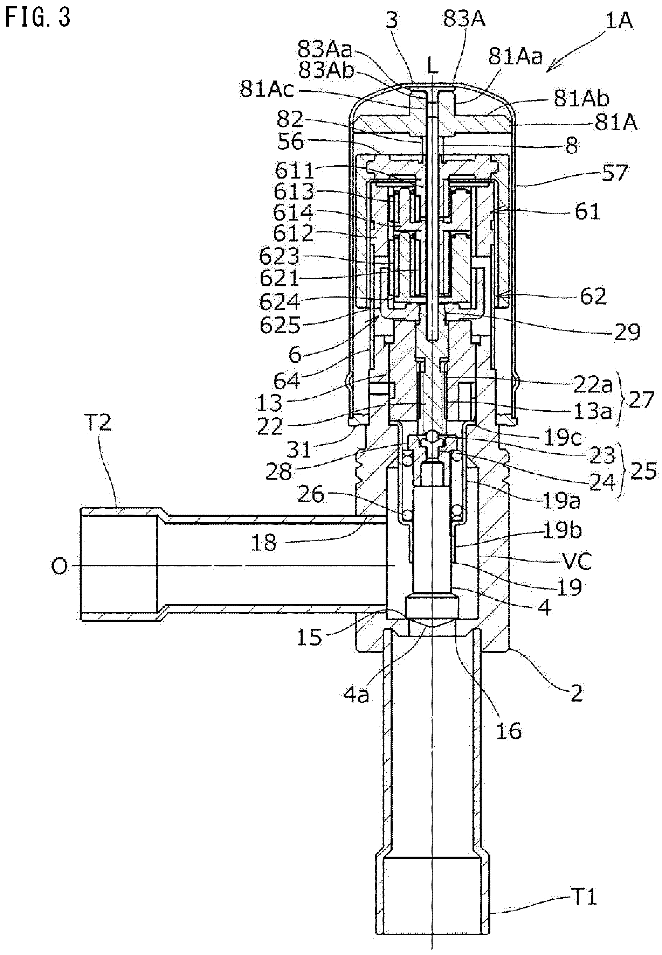

FIG. 3 is a vertical cross-sectional view illustrating a closed valve-state of the electric valve 1A according to a modified example of the first embodiment, and the stator disposed on the outer side of the can is similarly omitted. As illustrated in FIG. 3, in the present modified example as well, the shaft support portion 81A is formed by connecting a cylindrical portion 81Aa and a flange portion 81Ab disposed around the cylindrical portion 81Aa and having an outer circumference that comes into contact with the inner circumference of the can 3. However, the modified example differs from the first embodiment in that a through hole 81Ac is formed vertically through the cylindrical portion 81Aa.

In addition, between the lower surface of the can 3 and the upper end of the shaft support portion 81A, a buffer portion 83A is provided separately from the shaft support portion 81A so as to close up the through-hole 81Ac. The buffer portion 83A is formed by connecting a disk portion 83Aa interposed between the lower surface of the can 3 and the upper surface of the shaft support portion 81 and a short cylindrical portion 83Ab coaxially implanted in the disk portion 83Aa. The short cylindrical portion 83Ab is fitted into the upper portion of the through-hole 81Ac. The outer diameter (the contact area) of the disk portion 83Aa is larger than the outer diameter (the axially perpendicular cross-sectional area) of the support shaft 8 and the short cylindrical portion 83Ab, and is preferably a diameter of 3 times or more, for example. In addition, the length of the short cylindrical portion 83Ab is preferably at least twice the thickness of the disk portion 83Aa. Other than the shaft support portion 81A and the buffer portion 83A, the rest of the configuration is the same as that of the above-described embodiment, and therefore, the same reference numerals are used and redundant explanations are omitted. It should be noted that the buffer portion is a member disposed between the support shaft 8 and the can 3 so that the upper end of the support shaft 8 does not directly contact the can 3. By making the area where the buffer portion comes into contact with the can 3 larger than the area of the upper end of the support shaft 8, the surface pressure of the contact surface with the can 3 can be decreased.

Also, in the present modified example, in the case that the valve body 4 rises beyond the normal operating range, since the upper end of the support shaft 8 hits the short cylindrical portion 83Ab inside the through hole 81Ac before the fixed ring gear 612 and the output gear member 625 come into contact, and before the bottom surface of the shaft support portion 81 and the top surface of the rotor support member 56 come into contact, deformation and damage of the can 3 can be suppressed.

(Second Example, not part of the invention)

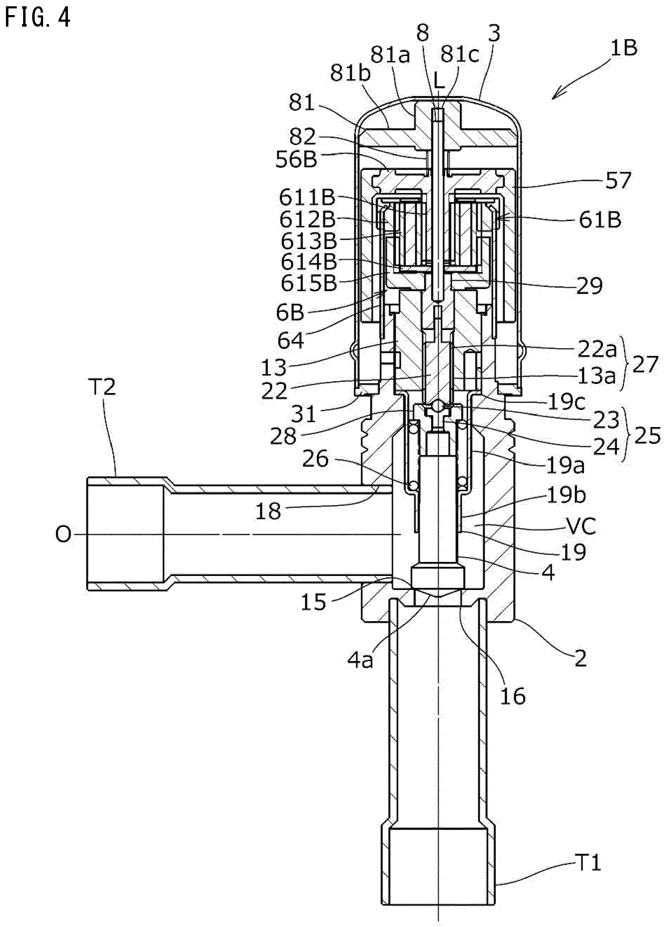

FIG. 4 is a vertical cross-sectional view illustrating a closed-valve state of an electric valve 1B according to a modified example of the second embodiment, and the stator disposed on the outer side of the can is similarly omitted. In the present example, not part of the invention, a single planetary gear reduction mechanism is provided.

More specifically, the reduction mechanism 6B includes only a first-stage reduction portion 61B. The first-stage reduction portion 61B includes, on the inner circumference of the rotor 57, a sun gear 611B integrally formed with a rotor support member 56B, a fixed ring gear 612B fixed to the valve body 2 via the thin cylindrical body 64, a planetary gear 613B interposed between and meshing with the sun gear 611B and the fixed ring gear 612B, a carrier 614B that rotatably supports the planetary gear 613B, and a closed-bottom cylindrical output gear member 615B having teeth on its inner circumference that mesh with the planetary gear 613B. These components constitute a mechanical paradox planetary gear reduction mechanism (a first planetary gear reduction mechanism) having a first reduction ratio. The number of teeth of the fixed ring gear 612B is set to be different from the number of teeth of the output gear member 615B. The output gear member 615B is connected to the output shaft portion 29 and rotates integrally. Other than the reduction mechanism 6B, as the rest of the configuration is the same as that of the above-described embodiment, the same reference numerals are used and redundant descriptions are omitted.

In the present example as well, when the rotor 57 of the stepping motor is driven to rotate by supplying power to the stator (not illustrated in the figures), the rotational torque of the rotor 57 is transmitted to the sun gear 611B of the first stage reduction portion 61B via the rotor support member 56B, and the rotational torque reduced by the first reduction ratio is output from the output gear member 615B. The rotational torque of the output gear member 615B is transmitted to the output shaft portion 29.

It should be noted that the present invention is not limited to the above-described embodiments. Variations of any of the components of the above-described embodiments are possible within the scope of the invention, which is limited only by the appended claims.

[Reference Signs List]

1, 1A, 1B: Electric valve
2: Valve main body portion
3: Can
4: Valve body
6, 6B: Reduction Mechanism
8: Support shaft
81, 81A: Shaft support portion
83A: Buffer portion
VC: Valve chamber
T1: First pipe
T2: First pipe

Claims

1. An electric valve (1, 1A, 1B) comprising:

    a valve main body (2) that includes a valve chamber (VC) for accommodating a valve body (4);
    a can (3) connected to the valve main body (2);
    a support shaft (8) that rotatably supports a rotor (57) of a motor;

a rotor support member (56, 56B);

a conversion mechanism for displacing the valve body (4) and the support shaft (8) in an axial direction in accordance with a rotation angle of the rotor;

a reduction mechanism for reducing a rotation of the rotor and transmitting the rotation to the conversion mechanism;

wherein said reduction mechanism comprises a first-stage reduction portion (61) and a second-stage reduction portion (62) arranged coaxially and connected in series,

the first-stage reduction portion (61) including, on the inner circumferential side of the rotor (57), a sun gear (611) integrally formed with the rotor support member (56), a fixed ring gear (612), an upper portion thereof being attached to the upper portion of the valve main body (2) and extending upward, a planetary gear (613) disposed between the sun gear (611) and the fixed ring gear (612) and meshing with each, and a carrier (614) rotatably supporting the planetary gear (613),

the second-stage reduction portion (62) including a sun gear (621) which is integral with the carrier (614) and is rotatably supported with respect to the support shaft (8), a lower portion of the fixed ring gear (612), a planetary gear (623) which is disposed between the sun gear (621) and the fixed ring gear (612) and meshes with each, a carrier (624) for rotatably supporting the planetary gear (623), and a closed-bottom cylindrical output gear member (625) having teeth on its inner circumference that mesh with the planetary gear (623),

a shaft support portion (81) for supporting the support shaft (8) so as to be movable in at least an axial direction with respect to the can (3); and

a buffer portion (83A) disposed between an end portion of the support shaft (8) and the can along an axial direction,

wherein in the valve-closed state, where

A is the axial direction minimum distance between the buffer portion (83A) and the upper end of the support shaft (8),

B is the axial direction minimum distance between the lower surface of the shaft support portion (81) and the upper surface of the rotor support member (56, 56B), and

C is the axial direction minimum distance between the lower surface of the fixed ring gear (612) and the upper surface of the output gear member (625),

the following relational expression is established:

$$A < C,$$

$$A < B,$$

and

$$B \leqq C.$$

2. The electric valve according to claim 1, wherein:
the shaft support portion (81) and the buffer portion (83A) are configured as one member.

3. The electric valve according to claim 1, wherein:
the shaft support portion (81) includes a through hole for supporting the support shaft (8) so as to be movable in at least the axial direction, and the through hole is closed up with the buffer portion (83A) that is separate from the shaft support portion (81).

4. The electric valve according to any one of claims 1 to 3, wherein:
a contact area of the buffer portion (83A) with respect to the can (3) is larger than an axially perpendicular cross-sectional area of the support shaft (8).

**Patentansprüche**

1. Ein elektrisches Ventil (1, 1A, 1B) umfassend:

einen Ventilhauptkörper (2), der eine Ventilkammer (VC) zur Aufnahme eines Ventilkörpers (4) umfasst;
eine Dose (3), die mit dem Ventilhauptkörper (2) verbunden ist;
eine Stützwelle (8), die einen Rotor (57) eines Motors drehbar lagert;
ein Rotorstützglied (56, 56B);
einen Umwandlungsmechanismus, um den Ventilkörper (4) und die Stützwelle (8) in einer axialen Richtung gemäß einem Drehwinkel des Rotors zu verlagern;
einen Reduktionsmechanismus zum Reduzieren einer Drehung des Rotors und zum Übertragen der Drehung auf den Umwandlungsmechanismus;
wobei der Reduktionsmechanismus einen ersten Untersetzungsabschnitt (61) und einen zweiten Untersetzungsabschnitt (62) umfasst, die koaxial angeordnet und in Reihe miteinander verbunden sind,
der erste Untersetzungsabschnitt (61) auf der inneren Umfangsseite des Rotors (57) ein Sonnenrad (611), das mit dem Rotorstützglied (56) einstückig ausgebildet ist, ein festes Ringzahnrad (612), wobei ein oberer Teil dessen am oberen Teil des Ventilhauptkörpers (2) befestigt ist und sich nach oben erstreckt, ein Planetengetriebe (613), das zwischen dem Sonnenrad (611) und dem festen Ringzahnrad (612) angeordnet ist und mit beiden verzahnt ist, und einen Träger (614), der das Planetenrad (613) drehbar lagert, umfasst,

der zweite Untersetzungsabschnitt (62) ein Sonnenrad (621), das mit dem Träger (614) einstückig ausgebildet ist und relativ zur Stützwelle (8) drehbar gelagert ist, einen unteren Abschnitt des festen Ringzahnrads (612), ein Planetengetriebe (623), das zwischen dem Sonnenrad (621) und dem festen Ringzahnrad (612) angeordnet ist und mit beiden verzahnt ist, einen Träger (624) zum drehbaren Lagern des Planetenrads (623), und ein zylindrisches Abtriebsgetriebe (625) mit geschlossenem Boden, das an seinem Innenumfang Zähne aufweist, die mit dem Planetenrad (623) verzahnt sind, einen Wellenstützabschnitt (81) zum Unterstützen der Stützwelle (8), sodass diese zumindest in axialer Richtung relativ zur Dose (3) beweglich ist; und

einen Pufferabschnitt (83A), der zwischen einem Endteil der Stützwelle (8) und der Dose entlang der axialen Richtung angeordnet ist, wobei im ventilgeschlossenen Zustand, wobei

A der minimale axiale Abstand zwischen dem Pufferabschnitt (83A) und dem oberen Ende der Stützwelle (8) ist,

B der minimale axiale Abstand zwischen der Unterseite des Wellenstützabschnitts (81) und der Oberseite des Rotorstützglieds (56, S6B) ist, und

C der minimale axiale Abstand zwischen der Unterseite des festen Ringzahnrads (612) und der Oberseite des Abtriebsgetriebes (625) ist,

die folgende Beziehung gilt:

$$A < C,$$

$$A < B,$$

und

$$B \leqq C.$$

2. Das elektrische Ventil gemäß Anspruch 1, wobei:
der Wellenstützabschnitt (81) und der Pufferabschnitt (83A) als ein einziges Element konzipiert sind.

3. Das elektrische Ventil gemäß Anspruch 1, wobei:

der Wellenstützabschnitt (81) ein Durchgangsloch zum Unterstützen der Stützwelle (8) aufweist, sodass diese zumindest in axialer Richtung beweglich ist, und das Durchgangsloch mit dem Pufferabschnitt (83A) verschlossen ist, das von dem Wellenstützabschnitt (81) getrennt ist.

4. Das elektrische Ventil gemäß einem der Ansprüche 1 bis 3, wobei:
eine Kontaktfläche des Pufferabschnitts (83A) in Bezug auf die Dose (3) größer ist als die axial senkrechte Querschnittsfläche der Stützwelle (8).

**Revendications**

1. Soupape électrique (1, 1A, 1B) comportant :

un corps principal de soupape (2) qui inclut une chambre de soupape (VC) destinée à recevoir un corps de soupape (4) ;
un boîtier (3) relié au corps principal de soupape (2) ;
une tige de support (8) qui supporte en rotation un rotor (57) d'un moteur ;
un élément de support de rotor (56, 56B) ;
un mécanisme de conversion pour déplacer le corps de soupape (4) et la tige de support (8) dans une direction axiale en fonction d'un angle de rotation du rotor ;
un mécanisme de réduction pour réduire une rotation du rotor et transmettre la rotation au mécanisme de conversion ;
dans laquelle ledit mécanisme de réduction comporte une partie de réduction de premier étage (61) et une partie de réduction de second étage (62) agencées coaxialement et raccordées en série,
la partie de réduction de premier étage (61) incluant, sur le côté circonférentiel intérieur du rotor (57), une roue solaire (611) formée solidaire de l'élément de support de rotor (56), une couronne fixe (612), une partie supérieure de celle-ci étant fixée à la partie supérieure du corps principal de soupape (2) et s'étendant vers le haut, un satellite (613) disposé entre la roue solaire (611) et la couronne fixe (612) et s'engrenant les uns avec les autres, et un porte-satellite (614) supportant en rotation le satellite (613),
la partie de réduction de second étage (62) incluant une roue solaire (621) qui est solidaire du porte-satellite (614) et est supportée en rotation par rapport à la tige de support (8), une partie inférieure de la couronne fixe (612), un satellite (623) qui est disposé entre la roue solaire (621) et la couronne fixe (612) et s'engrenant les uns avec les autres, un porte-satellite (624) pour supporter en rotation le satellite (623), et un élément d'engrenage de sortie cylindrique à fond fermé (625) ayant des dents sur sa circonférence intérieure qui s'engrènent avec le satellite (623),

une partie de support de tige (81) pour supporter la tige de support (8) de manière à être mobile dans au moins une direction axiale par rapport au boîtier (3) ; et

une partie de tampon (83A) disposée entre une partie d'extrémité de la tige de support (8) et le boîtier le long d'une direction axiale,

dans laquelle à l'état fermé de la soupape, où A est la distance minimale dans la direction axiale entre la partie de tampon (83A) et l'extrémité supérieure de la tige de support (8),

B est la distance minimale dans la direction axiale entre la surface inférieure de la partie de support de tige (81) et la surface supérieure de l'élément de support de rotor (56, 56B), et

C est la distance minimale dans la direction axiale entre la surface inférieure de la couronne fixe (612) et la surface supérieure de l'élément d'engrenage de sortie (625), l'expression relationnelle suivante est établie :

$$A < C,$$

$$A < B,$$

et

$$B \leqq C.$$

**2.** Soupape électrique selon la revendication 1, dans laquelle :

la partie de support de tige (81) et la partie de tampon (83A) sont configurées comme un seul élément.

**3.** Soupape électrique selon la revendication 1, dans laquelle :

la partie de support de tige (81) inclut un trou traversant pour supporter la tige de support (8) de manière à être mobile dans au moins la direction axiale, et le trou traversant est fermé par la partie de tampon (83A) qui est séparée de la partie de support de tige (81).

**4.** Soupape électrique selon l'une quelconque des revendications 1 à 3, dans laquelle :

une aire de contact de la partie de tampon (83A) par rapport au boîtier (3) est plus grande qu'une aire de section transversale axialement perpendiculaire de la tige de support (8).

# FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6561480 B1
- WO 2014069361 A1
- JP 2004308835 A
- JP 2021148280 A